# EUROPEAN PATENT SPECIFICATION

(11) **EP 3 354 869 B1**
(45) Date of publication and mention of the grant of the patent: **06.11.2019**
(21) Application number: 15904707.5
(22) Date of filing: 24.09.2015
(51) Int. Cl.: F01K 23/06, F01D 17/00, F01K 23/10, F01K 25/10, F02G 5/00, F02G 5/02, F02G 5/04, F01K 13/02

(54) **WASTE HEAT RECOVERY EQUIPMENT, INTERNAL COMBUSTION ENGINE SYSTEM, SHIP, AND WASTE HEAT RECOVERY METHOD**
ABWÄRMERÜCKGEWINNUNGSAUSRÜSTUNG, VERBRENNUNGSMOTORSYSTEM, SCHIFF UND ABWÄRMERÜCKGEWINNUNGSVERFAHREN
ÉQUIPEMENT DE RÉCUPÉRATION DE CHALEUR, SYSTÈME DE MOTEUR À COMBUSTION INTERNE, NAVIRE, ET PROCÉDÉ DE RÉCUPÉRATION DE CHALEUR

(43) Date of publication of application: 01.08.2018
(73) Proprietor: Mitsubishi Heavy Industries, Ltd., Tokyo 108-8215 (JP)
(72) Inventor: ICHIKI, Yoshihiro, Nagasaki-shi Nagasaki 850-8610 (JP)
(74) Representative: Hoffmann Eitle
(86) International application number: PCT/JP2015/076893
(87) International publication number: WO 2017/051450

(56) References cited:
- WO-A1-2011/136118
- CN-A- 103 161 607
- CN-A- 103 967 648
- JP-A- S6 226 304
- JP-A- 2006 057 597
- JP-A- 2012 082 750
- JP-A- 2012 149 541
- JP-A- 2015 113 084
- US-A1- 2010 263 380
- US-A1- 2010 313 565

## Description

### Technical Field

The present invention relates to waste heat recovery equipment, an internal combustion engine system, a ship, and a waste heat recovery method.

### Background Art

In the related art, in a system using a large diesel engine (internal combustion engine) for propulsion of a ship, there is known a waste heat recovery system which performs power generation by generating steam by recovering heat energy of exhaust gas which is discharged from a diesel engine, in an exhaust gas economizer, and driving a steam turbine with the steam.

Further, attempts have been made to recover heat even at a waste heat temperature lower than a temperature at which heat is recovered in an exhaust gas economizer and to effectively recover waste heat energy. For example, Japanese Unexamined Patent Application Publication No. 2013-160132 discloses an organic Rankine cycle (ORC) which

recovers waste heat from jacket cooling water which cools a jacket of a diesel engine, by using an organic fluid having a boiling point lower than that of water.

Further, Japanese Unexamined Patent Application Publication No. 2006-57597 discloses a configuration in which power generation is performed by a combination of a steam turbine which is driven by recovering heat from exhaust gas of an internal combustion engine and a steam turbine which is driven by recovering heat from jacket cooling water by using a low-boiling-point medium such as pentane.

WO 2011/136118 A1 discloses a waste heat recovery equipment and method which represents the closest prior art.

### Summary of Invention

### Technical Problem

However, in an organic Rankine cycle using an organic fluid which is a low-boiling-point medium, there is a problem in that a low-temperature heat source such as jacket cooling water which is used is not stable due to the influence of a load fluctuation or the like of an internal combustion engine. For this reason, it is
conceivable to coaxially connect an organic fluid turbine which is used in the organic Rankine cycle and a steam turbine. However, Japanese Unexamined Patent Application Publication No. 2006-57597 does not mention a control method in which either of the steam turbine side or the organic fluid turbine side is set as a controlled object and rotational driving which is stable with respect to a load fluctuation of an internal combustion engine, particularly when the internal combustion engine is at a low load, is obtained.

On the other hand, since the thermal efficiency of a diesel engine has been improved year by year, the amount of heat which can be recovered from exhaust gas in the exhaust gas economizer has decreased. For this reason, the amount of steam enough to cover inboard demand power with a steam turbine generator alone cannot be sufficiently secured in the exhaust gas economizer.

Further, in recent years, from the viewpoint of a reduction in fuel cost in the navigation of a ship, decelerating operation has been a mainstream, and therefore, there is a circumstance in which the amount of steam which can be further generated in the exhaust gas economizer is insufficient.

If a load of the diesel engine is reduced and falls below a predetermined value, steam necessary for the isolated operation of the steam turbine is not obtained in only the exhaust gas economizer, and therefore, control to stop the operation of the steam turbine is performed. If the operation of the steam turbine is stopped, in a case where control is performed with the steam turbine as a master, the organic fluid turbine which is subordinated to the steam turbine also has to be stopped. In this case, it is not possible to perform power generation by independently driving the organic fluid turbine, and thus there is a case where the thermal energy of the exhaust gas cannot be effectively recovered.

In contrast, in a case where it is not possible to obtain the inboard demand power by the steam turbine or the organic fluid turbine, it is conceivable to activate a diesel generator which generates electric power by a separately provided diesel engine for power generation. However, the operation of the diesel generator increases fuel cost, and therefore, it is not preferable from the viewpoint of cost reduction. Further, if both the steam turbine and the diesel generator are operated, the lowest load of the diesel generator is preferentially managed, whereby there is a possibility that excess steam may be generated in the steam turbine. The excess steam is dumped to a condenser, and therefore a thermal loss is caused. Therefore, it is required to obtain the inboard demand power without activating the diesel generator as much as possible, even if a load on the diesel engine is reduced.

The present invention has been made in view of such circumstances and has an object to provide waste heat recovery equipment, an internal combustion engine system, a ship, and a waste heat recovery method, in which even in a case where a load on an internal combustion engine is reduced, and thus the isolated operation of a steam turbine is difficult, the steam turbine can continue to be operated and perform power generation together with an organic fluid turbine.

### Solution to Problem

This object is solved by a waste heat recovery equipment with the features of claim 1, an internal combustion engine system with the features of claim 7, a ship with the features of claim 8 and a waste heat recovery method with the features of claim 9. Preferred embodiments follow from the other claims. In order to solve the above problem, waste heat recovery equipment, an internal combustion engine system, a ship, and a waste heat recovery method according to the present invention adopt the following means.

That is, waste heat recovery equipment according to an aspect of the present invention includes: an exhaust gas economizer which generates main steam by recovering heat from exhaust gas discharged from an internal combustion engine main body; a steam turbine which is mainly driven by the main steam derived from the exhaust gas economizer; an organic fluid heat exchanger which generates vapor of an organic fluid by recovering heat from a low-temperature heat source having a temperature lower than a temperature at which heat is recovered in the exhaust gas economizer; an organic fluid turbine which is driven by the vapor of the organic fluid generated in the organic fluid heat exchanger; a generator which generates electric power by an output from at least one of the steam turbine and the organic fluid turbine; and an auxiliary boiler which generates auxiliary steam by using combustion heat of fuel, in which the organic fluid turbine is operated at a speed which is subordinated to speed adjustment of the steam turbine, and the auxiliary steam generated in the auxiliary boiler is supplied to the steam turbine in a case where pressure of the main steam generated in the exhaust gas economizer reaches a value equal to or less than a threshold value.

It cannot be said that a low-temperature heat source (for example, jacket cooling water) having a temperature lower than a temperature at which heat is recovered in the exhaust gas economizer is a stable heat source, because it is greatly affected by a load fluctuation or the like of an internal combustion engine. For this reason, an organic fluid turbine utilizing such a low-temperature heat source is operated at a speed which is subordinated to speed adjustment of a steam turbine having excellent stability. That is, operation with the steam turbine as a master and the organic fluid turbine as a slave is performed. Therefore, control is performed in which if the operation of the steam turbine which is a master is stopped, the operation of the organic fluid turbine which is a slave is also stopped.

On the other hand, if a load on the internal combustion engine is reduced, the main steam which is generated in the exhaust gas economizer decreases and the steam pressure which is supplied to the steam turbine decreases. Then, in a case where the pressure of the main steam which is generated in the exhaust gas economizer reaches a value equal to or less than a threshold value, in the present invention, the auxiliary steam generated in the auxiliary boiler is supplied to the steam turbine to continue the operation of the steam turbine. In this way, it is possible to avoid stopping of the steam turbine, and therefore, the operation of the organic fluid turbine which is operated in subordination to the steam turbine is also continued, and thus power generation by the organic fluid turbine becomes possible even if the internal combustion engine is at a low load. Therefore, since it is not necessary to activate a diesel generator, it is possible to save the fuel cost for operating the diesel generator, and in some cases, the diesel generator is not installed, and thus it is possible to reduce initial cost. In the waste heat recovery equipment according to an aspect of the present invention, although fuel is used for the operation of the auxiliary boiler, since the fuel cost of the auxiliary boiler is much cheaper than the fuel cost which is consumed in the diesel generator, there is sufficient cost merit.

As a threshold value for determining a timing when the auxiliary steam is supplied from the auxiliary boiler, it is determined on the basis of the minimum pressure at which the steam turbine can be independently operated by the main steam which is supplied from the exhaust gas economizer.

As the pressure of the main steam which is generated in the exhaust gas economizer, preferably, the drum pressure of a steam separator configuring the exhaust gas economizer is used.

As the low-temperature heat source, for example, engine cooling water having a temperature in a range of 80°C to 90°C can be given.

The steam turbine and the organic fluid turbine are connected to a shared generator. However, the steam turbine and the organic fluid turbine may be connected to each other by a shared rotary shaft, or the steam turbine and the organic fluid turbine may be respectively provided with separate rotary shafts and connected to a generator through gears. In short, it is favorable if the rotary shaft of the organic fluid turbine is connected to the rotary shaft of the steam turbine through a rotary shaft of a speed reducer or a generator so as to depend on the speed of the steam turbine.

Further, in the waste heat recovery equipment according to an aspect of the present invention, the auxiliary boiler may be a fuel heating boiler which generates steam for heating fuel oil which is supplied to the internal combustion engine.

In order to properly adjust the viscosity of the fuel oil (for example, C heavy oil) which is supplied to the internal combustion engine, the fuel oil is heated by steam. In order to generate the steam for fuel heating, in general, a fuel heating boiler is provided in the equipment of the internal combustion engine. In the present invention, this fuel heating boiler is used as the auxiliary boiler for supplying steam to the steam turbine. In this way, it is possible to configure the waste heat recovery equipment according to the present invention without the need to add a new dedicated boiler.

Further, an internal combustion engine system according to an aspect of the present invention includes: an internal combustion engine main body; and the waste heat recovery equipment described above.

Since the waste heat recovery equipment according to any one of the above is provided, it is possible to provide an internal combustion engine system capable of supplying demand power without operating a diesel generator, even if the internal combustion engine is at a low load.

Further, a ship according to an aspect of the present invention includes: the internal combustion engine system described above.

Since it is a ship provided with the internal combustion engine system described above, it is possible to cover inboard demand power without operating a diesel generator and it is possible to provide a ship capable of performing navigation with reduced fuel oil consumption.

Further, a waste heat recovery method according to an aspect of the present invention includes: a main steam generation step of generating main steam by recovering heat from exhaust gas discharged from an internal combustion engine main body; a steam turbine driving step of driving a steam turbine with the main steam obtained in the main steam generation step; an organic fluid vapor generation step of generating vapor of an organic fluid by recovering heat from a low-temperature heat source having a temperature lower than a temperature at which heat is recovered in the main steam generation step; an organic fluid turbine driving step of driving an organic fluid turbine with the vapor of the organic fluid obtained in the organic fluid vapor generation step; a power generation step of performing power generation by an output obtained in at least one of the steam turbine driving step and the organic fluid turbine driving step; and an auxiliary steam generation step of generating auxiliary steam by using combustion heat of fuel, in which the organic fluid turbine is operated at a speed which is subordinated to speed adjustment of the steam turbine, and the auxiliary steam generated in the auxiliary steam generation step is supplied to the steam turbine in a case where pressure of the main steam which is generated in the main steam generation step reaches a value equal to or less than a threshold value.

### Advantageous Effects of Invention

According to the present invention, even in a case where a load on an internal combustion engine is reduced, and thus the isolated operation of a steam turbine by an exhaust gas economizer is difficult, the steam turbine can perform power generation together with an organic fluid turbine.

### Brief Description of Drawings

Fig. 1 is a schematic configuration diagram showing an embodiment of an internal combustion engine system according to the present invention.
Fig. 2 is a graph showing a control method of the internal combustion engine system of Fig. 1.

### Description of Embodiments

Hereinafter, an embodiment of the present invention will be described with reference to the drawings.

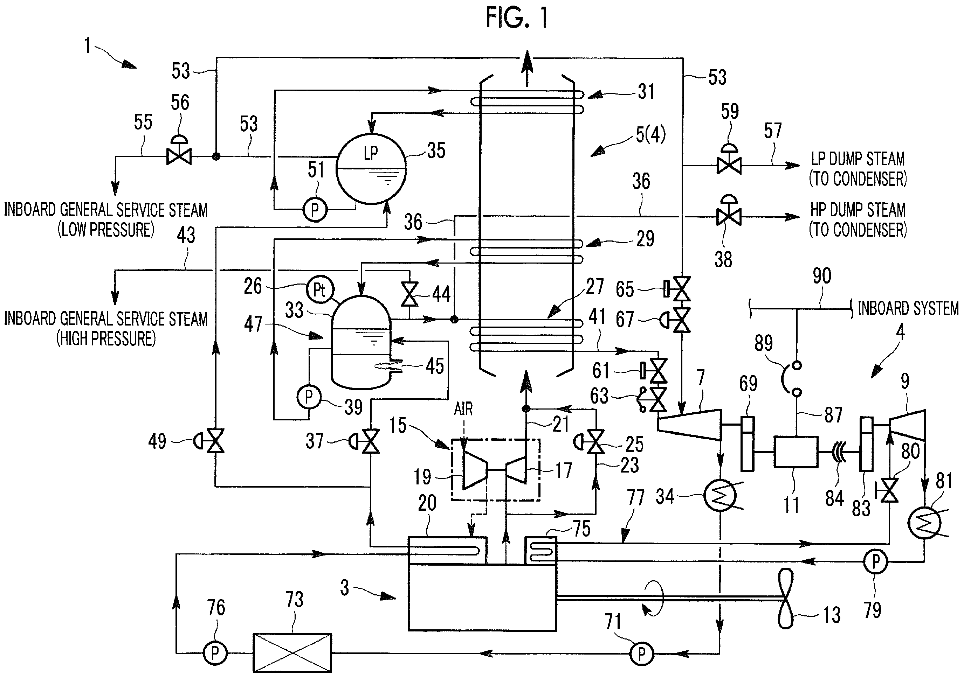

As shown in Fig. 1, a diesel engine system 1 installed in a ship is provided with a diesel main engine (an internal combustion engine) 3 and waste heat recovery equipment 4 for recovering heat which is discharged from the diesel main engine 3.

The waste heat recovery equipment 4 is provided with an exhaust gas economizer 5 which generates steam by high-temperature exhaust gas which is discharged from the diesel main engine 3, and a steam turbine 7 which is mainly driven by the steam generated in the exhaust gas economizer 5 (the steam generated in the exhaust gas economizer 5 is hereinafter referred to as "main steam"). Further, the waste heat recovery equipment 4 is provided with an organic fluid turbine 9 which is driven by vapor of an organic fluid heated by heat exchange with jacket cooling water (a low-temperature heat source) flowing through a jacket cooler of the diesel main engine 3 in an organic fluid heat exchanger 75. Each of the steam turbine 7 and the organic fluid turbine 9 drives a shared generator 11.

The diesel main engine 3 is a low-speed two-stroke one-cycle uniflow scavenging system which is operated at a rated speed of 200 rpm or less, for example, and drives a propeller 13 for ship propulsion. Compressed air (scavenging air) which is supplied to the diesel main engine 3 is derived from a turbocharger 15 which is driven by the exhaust gas of the diesel main engine 3.

The turbocharger 15 has an exhaust turbine 17 and a compressor 19 provided coaxially.

The exhaust turbine 17 is made so as to be rotationally driven by the exhaust gas discharged from the diesel main engine 3. If the exhaust turbine 17 is driven, the compressor 19 provided coaxially therewith rotates to compress air. The air compressed by the compressor 19 is cooled by an air cooler 20 and then led to a scavenging trunk (not shown) of the diesel main engine 3.

The downstream side of the exhaust turbine 17 is connected to the exhaust gas economizer 5 through an exhaust gas pipe 21.

An exhaust gas bypass pipe 23 is provided such that a part of the exhaust gas of the diesel main engine 3 is extracted and bypasses the turbocharger 15. The exhaust gas bypass pipe 23 has an upstream end connected to the upstream side of the exhaust turbine 17, and a downstream end connected to the exhaust gas pipe 21 of the turbocharger 15. An exhaust gas bypass valve 25 is provided in the exhaust gas bypass pipe 23. The exhaust gas bypass valve 25 is made such that the opening degree thereof is controlled by a control unit (not shown).

The control unit is configured of, for example, a CPU (Central Processing Unit), a RAM (Random Access Memory), a ROM (Read Only Memory), a computer-readable storage medium, and the like. A series of processing for realizing various functions is stored in a storage medium or the like as a program form as an example, and the CPU reads the program to the RAM or the like and executes processing and calculation processing of information, whereby various functions are realized. As the program, a form installed in a ROM or other storage medium in advance, a form which is provided in a state of being stored in a computer-readable storage medium, a form which is distributed through communication means by wire or wireless, or the like may be applied. The computer-readable storage medium is a magnetic disk, a magnetooptical disk, a CD-ROM, a DVD-ROM, a semiconductor memory, or the like.

The exhaust gas economizer 5 has a superheater 27, a first evaporator 29, and a second evaporator 31 in a flue gas duct thereof. The superheater 27, the first evaporator 29, and the second evaporator 31 are heat transfer tube groups installed in order from the bottom to the top (from the upstream side to the downstream side of an exhaust gas flow) in the flue gas duct of the exhaust gas economizer 5. High-temperature exhaust gas derived from the turbocharger 15 side flows in the flue gas duct of the exhaust gas economizer 5, and the exhaust gas flows through the flue gas duct and then is discharged to the atmosphere via a chimney (not shown) connected to the downstream side.

Saturated steam is led from a gas phase portion on the upper side of a high-pressure steam separator 33 to the superheater 27. Water is led from a liquid phase portion on the lower side of the high-pressure steam separator 33 to the first evaporator 29. Water is led from a liquid phase portion on the lower side of a low-pressure steam separator 35 to the second evaporator 31.

Water derived from the air cooler 20 through a high-pressure level adjustment valve 37 which adjusts a water level in the high-pressure steam separator 33 is supplied to the high-pressure steam separator 33. The water in the high-pressure steam separator 33 is led to the first evaporator 29 by a high-pressure circulating water pump 39. Wet steam containing moisture from the first evaporator 29 is led to the high-pressure steam separator 33 and separated into water and steam. The separated saturated steam is led to the superheater 27 and becomes superheated steam. The superheated steam generated in the superheater 27 is led to the steam turbine 7 through a superheated steam supply pipe 41.

A pressure sensor 26 for detecting a drum pressure in the high-pressure steam separator 33 is provided in the high-pressure steam separator 33. The detection output of the pressure sensor 26 is transmitted to the control unit.

A high-pressure steam extraction pipe 43 for extracting and taking out the saturated steam heading for the superheater 27 through a high-pressure steam extraction valve 44 is provided between the gas phase portion of the high-pressure steam separator 33 and the superheater 27. The high-pressure steam taken out through the high-pressure steam extraction pipe 43 is used as inboard general service steam.

Further, a high-pressure steam dump pipe 36 which takes out the saturated steam heading for the superheater 27 and leads it to a condenser 34 is provided between the gas phase portion of the high-pressure steam separator 33 and the superheater 27. A high-pressure dump valve 38 which is controlled by the control unit is provided in the high-pressure steam dump pipe 36. The high-pressure dump valve 38 is opened, whereby steam which is regarded as being excess to be supplied to the steam turbine 7 bypasses the steam turbine 7 and is exhausted to the condenser 34. A timing when the high-pressure dump valve 38 is opened is regarded as being a case where the drum pressure which is obtained by the pressure sensor 26 described above exceeds a predetermined threshold value.

A burner 45 for burning fuel is provided in the high-pressure steam separator 33. The burner 45 is for heating the water in the high-pressure steam separator 33 to generate steam. The steam generated by the burner 45 is supplied to a fuel heater which performs heating in order to adjust the viscosity of fuel oil (for example, C heavy oil) which is supplied to the diesel main engine 3. In this manner, an auxiliary boiler 47 is configured of the burner 45 and the high-pressure steam separator 33. The auxiliary boiler 47 is also called a composite boiler or a donkey boiler and is standardly mounted on the diesel engine system 1. Further, the auxiliary boiler 47 can also supply steam for heating of a residential area.

Further, in this embodiment, a configuration is made such that the auxiliary steam generated by the burner 45 of the auxiliary boiler 47 can be led to the steam turbine 7. An ignition timing of the burner 45 when leading the auxiliary steam to the steam turbine 7 is determined by the control unit, based on the output of the pressure sensor 26 provided in the high-pressure steam separator 33.

Water derived from the air cooler 20 through a low-pressure level adjustment valve 49 for adjusting a water level in the low-pressure steam separator 35 is supplied to the low-pressure steam separator 35. The water in the low-pressure steam separator 35 is led to the second evaporator 31 by a low-pressure circulating water pump 51.

Wet steam containing moisture from the second evaporator 31 is led to the low-pressure steam separator 35 and separated into water and steam. The separated saturated steam is led to an intermediate stage of the steam turbine 7 through a low-pressure steam supply pipe 53.

A low-pressure steam extraction pipe 55 for extracting and taking out the saturated steam is provided in the low-pressure steam supply pipe 53. A low-pressure steam extraction valve 56 is provided in the low-pressure steam extraction pipe 55. The low-pressure steam taken out through the low-pressure steam extraction pipe 55 is used as inboard general service steam.

Further, a low-pressure steam dump pipe 57 which takes out the saturated steam heading for the intermediate stage of the steam turbine 7 and leads it to the condenser 34 is provided in the low-pressure steam supply pipe 53. A low-pressure dump valve 59 which is controlled by the control unit is provided in the low-pressure steam dump pipe 57. Due to the low-pressure steam dump pipe 57, steam which is regarded as being excess to be supplied to the intermediate stage of the steam turbine 7 bypasses the steam turbine 7 and is exhausted to the condenser 34.

A high-pressure steam stop valve 61 and a speed adjustment valve 63 are provided in the superheated steam supply pipe 41 which leads the superheated steam to the upstream side (the high-pressure side) of the steam turbine 7. The high-pressure steam stop valve 61 and the speed adjustment valve 63 are controlled by the control unit. In a case where the steam turbine 7 is operated, the high-pressure steam stop valve 61 which is an on-off valve is fully opened, and in a case where the steam turbine 7 is not operated, the high-pressure steam stop valve 61 is fully closed. The opening degree of the speed adjustment valve 63 is adjusted so as to correspond to the frequency and the power generation amount demand of the inboard system, based on the instruction of the control unit.

A low-pressure steam stop valve 65 and a low-pressure steam control valve 67 are provided in the low-pressure steam supply pipe 53 which leads low-pressure steam to the intermediate stage of the steam turbine 7. The low-pressure steam stop valve 65 and the low-pressure steam control valve 67 are controlled by the control unit. In a case where the steam turbine 7 is operated, the low-pressure steam stop valve 65 which is an on-off valve is fully opened, and in a case where the steam turbine 7 is not operated, the low-pressure steam stop valve 65 is fully closed. The opening degree of the low-pressure steam control valve 67 is adjusted based on the instruction of the control unit.

The steam turbine 7 is rotationally driven by the superheated steam led through the high-pressure steam stop valve 61 and the speed adjustment valve 63, and the low-pressure steam led through the low-pressure steam stop valve 65 and the low-pressure steam control valve 67, and the rotation output thereof is transmitted to the generator 11 through a steam turbine-side speed reducer 69.

The steam which has finished work in the steam turbine 7 is led to the condenser 34 and cooled by seawater or fresh water to be condensed and liquefied. The condensed and liquefied condensate is led to an atmospheric pressure drain tank 73 by a condensate pump 71, and gas-liquid separation is performed. The water degassed in the atmospheric pressure drain tank 73 is led to the air cooler 20 by a feed-water pump 76. In the air cooler 20, the compressed air compressed by the compressor 19 of the turbocharger 15 and having risen in temperature is cooled by the water led by the feed-water pump 76.

The diesel main engine 3 is provided with the organic fluid heat exchanger 75 which performs heat exchange with the jacket cooling water flowing through the jacket cooler which cools each cylinder. The temperature of the jacket cooling water is set to be in a range of 80°C to 90°C. The organic fluid heat exchanger 75 is provided in an organic fluid pathway 77 through which an organic fluid and vapor of the organic fluid circulate. As the organic fluid, a low-boiling-point medium which evaporates at a heat source of the jacket cooling water is preferable, and low-molecular hydrocarbon such as isopentane, butane, or propane, R134a or R245fa which is used as a refrigerant, or the like can be used.

The organic fluid pathway 77 forms a closed circuit, and an organic fluid pump 79 for circulating the organic fluid is provided in the organic fluid pathway 77. The organic fluid circulates while repeating a phase change, so as to pass through the organic fluid heat exchanger 75, an organic fluid inlet valve 80, the organic fluid turbine 9, and a condenser 81.

The organic fluid inlet valve 80 is controlled by the control unit, and is fully opened in a case where the organic fluid turbine 9 is operated, and fully closed in a case where the organic fluid turbine 9 is not operated.

The organic fluid turbine 9 is rotationally driven by the vapor of the organic fluid generated by the organic fluid heat exchanger 75. The rotational power of the organic fluid turbine 9 is decelerated by an organic fluid-side speed reducer 83 and then transmitted to the generator 11 through an automatic engagement/disengagement clutch 84. The automatic engagement/disengagement clutch 84 is also called a synchro self-shifting clutch or an SSS (three-S) clutch, and when the rotational frequency of an output shaft on the organic fluid turbine 9 side reaches the rotational frequency of an input shaft of the automatic engagement/disengagement clutch 84, claws mesh with each other to transmit a rotating force.

The vapor of the organic fluid which has finished work in the organic fluid turbine 9 is cooled by seawater or fresh water in the condenser 81 to be condensed and liquefied. The condensed and liquefied organic fluid is sent to the organic fluid heat exchanger 75 by the organic fluid pump 79.

In this manner, the organic fluid pathway 77 configures an organic Rankine cycle (ORC) together with the organic fluid heat exchanger 75, the organic fluid turbine 9, the condenser 81, and the organic fluid pump 79.

The organic fluid turbine 9 does not have the speed adjustment valve 63 as in the steam turbine 7 and is not made so as to perform speed adjustment. This is because speed adjustment by controlling the flow rate of the vapor of the organic fluid vapor is difficult because the amount of heat from the jacket cooling water performing heat recovery in the organic fluid heat exchanger 75 greatly depends on a load fluctuation of the diesel main engine and the heat recovery amount is not stable. Therefore, in this embodiment, the organic fluid turbine 9 is connected to the generator 11 shared by the steam turbine 7, and therefore, the organic fluid turbine 9 is subordinated to the speed control of the steam turbine 7. That is, control with the steam turbine 7 as a master and the organic fluid turbine 9 as a slave is performed. In this way, while the steam turbine 7 is being operated, the organic fluid turbine 9 can also be operated, and thus power generation using both the steam turbine 7 and the organic fluid turbine 9 can be performed in the generator 11. A total driving force in which the driving force of the organic fluid turbine 9 is added to the driving force of the steam turbine 7 is transmitted to the generator 11. The total driving force is stably controlled by the speed adjustment valve 63. The electric output obtained in the generator 11 is led to an inboard power system 90 through an output wire 87 and a breaker 89.

Next, an operation method of the diesel engine system 1 described above will be described.

If the diesel main engine 3 starts operation, the compressed air compressed in the turbocharger 15 is cooled in the air cooler 20 and then supplied to the diesel main engine 3. In the cylinder of the diesel main engine 3, combustion is performed by the supplied compressed air and fuel oil. As the fuel oil, fuel oil having viscosity adjusted in a fuel oil heating device by the steam generated by the auxiliary boiler 47 is used.

The exhaust gas after the combustion is performed in the diesel main engine 3 passes through the exhaust turbine 17 of the turbocharger 15 and is led to the exhaust gas economizer 5 through the exhaust gas pipe 21. The exhaust gas performs heat exchange with the superheater 27, the first evaporator 29, and the second evaporator 31 when passing through the exhaust gas economizer 5.

The water in the first evaporator 29 becomes wet steam due to heat exchange with the exhaust gas. The wet steam is led to the high-pressure steam separator 33, in which moisture is then separated therefrom, and thereafter, is led to the superheater 27. The steam in the superheater 27 becomes superheated steam due to heat exchange with the exhaust gas. The superheated steam generated in this manner passes through the superheated steam supply pipe 41 and is supplied to the steam turbine 7 via the high-pressure steam stop valve 61 and the speed adjustment valve 63.

The water in the second evaporator 31 becomes wet steam due to heat exchange with the exhaust gas. The wet steam is led to the low-pressure steam separator 35, in which moisture is then separated therefrom, and thereafter, the separated low-pressure steam passes through the low-pressure steam supply pipe 53 and is supplied to the intermediate stage of the steam turbine 7 via the low-pressure steam stop valve 65 and the low-pressure steam control valve 67.

The steam turbine 7 is rotationally driven by the superheated steam and the low-pressure steam led as described above, and the rotation output thereof is transmitted to the generator 11.

On the other hand, the jacket cooling water which has cooled the cylinder in the jacket cooler of the diesel main engine 3 is led to the organic fluid heat exchanger 75 and performs heat exchange with the organic fluid circulating through the organic fluid pathway 77. The organic fluid is heated and evaporated by the sensible heat of the jacket cooling water in the organic fluid heat exchanger 75. The vapor of the organic fluid evaporated to have a high enthalpy is led to the organic fluid turbine 9 and rotationally drives the organic fluid turbine 9 by a heat drop thereof. In a case where the rotational frequency of the organic fluid turbine 9 reaches a value equal to or higher than a predetermined value, the automatic engagement/disengagement clutch 84 is engaged, and thus the rotation output of the organic fluid turbine 9 is transmitted to the generator 11. The subsequent rotational frequency of the organic fluid turbine 9 depends on the speed adjustment of the steam turbine 7 which is a master.

The vapor of the organic fluid which has finished work in the organic fluid turbine 9 is led to the condenser 81 and is condensed and liquefied by being cooled by seawater or fresh water. The condensed and liquefied organic fluid is led to the organic fluid heat exchanger 75 again by the organic fluid pump 79.

In the generator 11, power generation is performed by the rotation output obtained from the steam turbine 7 and the organic fluid turbine 9, and the power generation output thereof is supplied to the inboard power system 90 through the output wire 87 and the breaker 89.

Then, in this embodiment, in a case where a load on the diesel main engine 3 decreases and the pressure of the steam which is generated in the exhaust gas economizer 5 decreases to a value equal to or less than a threshold value, the following control is performed.

If a load on the diesel main engine 3 decreases, exhaust gas energy decreases, and therefore, the pressure of the high-pressure steam which is generated in the exhaust gas economizer 5 decreases. The pressure of the high-pressure steam is detected by the pressure sensor 26 provided in the high-pressure steam separator 33 and sent to the control unit. In the control unit, in a case where the pressure obtained from the pressure sensor 26 reaches a value equal to or less than the threshold value, an ignition command is transmitted to the burner 45 of the auxiliary boiler 47 to ignite the burner 45. The threshold value of the pressure at which the ignition of the burner 45 is performed is determined on the basis of the minimum pressure at which the steam turbine 7 can be independently operated by the steam which is supplied from the exhaust gas economizer 5.

If the burner 45 of the auxiliary boiler 47 is ignited, steam is generated in the high-pressure steam separator 33 by the combustion heat of the burner 45, and the generated steam is led to the steam turbine 7 through the speed adjustment valve 63. In this way, the operation of the steam turbine 7 is continued and at the same time, the operation of the organic fluid turbine 9 which is subordinated to the steam turbine 7 is also continued.

Thereafter, in a case where a load on the diesel main engine 3 increases and the pressure of the steam which is obtained from the exhaust gas economizer 5 is restored and reaches a value equal to or larger than a predetermined value, the isolated operation of the steam turbine becomes possible only with the steam from the exhaust gas economizer 5. In this case, the ignition of the burner 45 of the auxiliary boiler 47 may be stopped by a command from the control unit or the ignition of the burner 45 may be continued in relationship to the inboard demand power. In a case where the ignition of the burner 45 is continued, it may be continued, for example, until the pressure in the high-pressure steam separator 33 rises to reach the pressure at which the high-pressure dump valve 38 is opened. In this way, with the steam from the auxiliary boiler 47, it is possible to compensate for the inboard demand power which is insufficient only with the steam from the exhaust gas economizer 5.

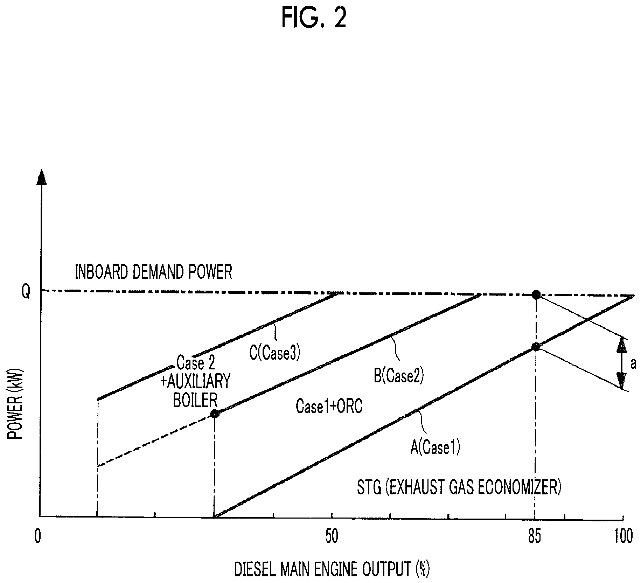

In Fig. 2, a control method of the waste heat recovery equipment 4 of this embodiment is shown together with a comparative example. Each numerical value in the drawing is an example mentioned for easier understanding of the invention and does not limit the invention.

In the drawing, the horizontal axis represents diesel main engine output (%) and the vertical axis represents power (kW). The diesel main engine output of 100% means the rated output of the diesel main engine, and Q (kW) means the inboard demand power.

A line A is Case 1 as a comparative example and shows the power generation amount of the steam turbine (STG) 7 which is driven only with the steam obtained from the exhaust gas economizer 5. As can be seen from the drawing, in a case where the diesel main engine output is 100%, it is possible to obtain the inboard demand power. However, at the diesel main engine output of 85%, which is a normal operation load, the power becomes insufficient by a (kW). Further, if the diesel main engine output decreases to 30%, the isolated operation by the steam turbine 7 becomes impossible only with the steam from the exhaust gas economizer 5, and the power generation amount becomes zero.

A line B is Case 2 as a comparative example and shows the power generation amount in a case where the power generation by the organic Rankine cycle (ORC) using the organic fluid turbine 9 is combined in addition to the steam turbine 7 of Case 1. Also in Case 2, similar to Case 1, the steam turbine 7 is operated only with the steam from the exhaust gas economizer 5. As can be seen from the drawing, at the diesel main engine output of 85%, which is a normal operation load, it is possible to obtain the inboard demand power with the assistance of the organic fluid turbine 9. However, it the diesel main engine output falls below 75%, it is not possible to obtain the inboard demand power only with the steam turbine 7 and the organic fluid turbine 9. Further, if the diesel main engine output decreases to 30%, the isolated operation in the steam turbine 7 becomes impossible, and the organic fluid turbine 9 which is controlled in subordination to the steam turbine 7 also stops at the same time, and therefore, the power generation amount becomes zero.

A line C is Case 3 showing this embodiment and shows the power generation amount in a case where the auxiliary boiler 47 is used in addition to the combination of the steam turbine 7 and the organic fluid turbine 9 of Case 2. As can be seen from the drawing, since the steam turbine 7 is assisted by the steam from the auxiliary boiler 47, the inboard demand power can be obtained until the diesel main engine output falls below 50%. Further, even if the diesel main engine output falls below 30% and the isolated operation of the steam turbine 7 becomes impossible only with the steam from the exhaust gas economizer 5, the operation of the steam turbine 7 is continued by the steam from the auxiliary boiler 47, and therefore, the operation of the organic fluid turbine 9 is also continued, and thus it becomes possible to perform power generation until the diesel main engine output becomes 10%.

As described above, according to this embodiment, the following operational effects are exhibited.

The steam generated in the auxiliary boiler 47 is supplied to the steam turbine 7, and thus the operation of the steam turbine 7 is continued. In this way, even if a load on the diesel main engine 3 decreases, stopping of the steam turbine 7 can be avoided, and therefore, the operation of the organic fluid turbine 9 which operates in subordination to the steam turbine is also continued, so that the power generation by the organic fluid turbine 9 becomes possible. Therefore, since it is not necessary to activate a diesel generator, it is possible to save the fuel cost for operating the diesel generator, and in some cases, the diesel generator is not installed, and thus it is possible to reduce initial cost.

Since the auxiliary boiler 47 for heating the fuel oil of the diesel main engine 3 is also used as a boiler for supplying steam to the steam turbine 7, it is possible to configure the waste heat recovery equipment 4 of this embodiment without the need to add a new dedicated boiler.

In the embodiment described above, description has been made on the premise of an internal combustion engine system which is applied to a ship. However, the present invention is not limited thereto and can also be applied to an internal combustion engine system which is installed on land.

Further, description has been made with jacket cooling water taken as an example of a low-temperature heat source. However, even if it is a low-temperature heat source having a temperature lower than the temperature at which heat is recovered in the exhaust gas economizer, and furthermore, having a temperature of 100°C or less, as long as the organic fluid turbine can be operated by recovering heat by the organic fluid, low-temperature heat sources other than the jacket cooling water can also be used.

### Reference Signs List

1: diesel engine system (internal combustion engine system)
3: diesel main engine (internal combustion engine)
4: waste heat recovery equipment
5: exhaust gas economizer
7: steam turbine
9: organic fluid turbine
11: generator
15: turbocharger
20: air cooler
26: pressure sensor
27: superheater
29: first evaporator
31: second evaporator
33: high-pressure steam separator
35: low-pressure steam separator
45: burner
47: auxiliary boiler
63: speed adjustment valve
75: organic fluid heat exchanger (low-temperature heat source)
77: organic fluid pathway
79: organic fluid pump
80: organic fluid inlet valve
81: condenser
90: inboard power system

## Claims

1. Waste heat recovery equipment comprising:
an exhaust gas economizer (5) which is configured to generate main steam by recovering heat from exhaust gas discharged from an internal combustion engine main body;
a steam turbine (7) which is configured to be mainly driven by the main steam derived from the exhaust gas economizer (5);
an organic fluid heat exchanger (75) which is configured to generate vapor of an organic fluid by recovering heat from a low-temperature heat source having a temperature lower than a temperature at which heat is recovered in the exhaust gas economizer (5);
an organic fluid turbine (9) which is configured to be driven by the vapor of the organic fluid generated in the organic fluid heat exchanger (75);
a generator (11) which is configured to generate electric power by an output from at least one of the steam turbine (7) and the organic fluid turbine (9);
an auxiliary boiler (47) which is configured to generate auxiliary steam by using combustion heat of fuel; and
a control unit; **characterized in that** the control unit is configured to control a burner (45) of the auxiliary boiler (47) to ignite the burner (45) to generate auxiliary steam in a case in which a pressure value detected by a pressure sensor (26) which is configured to detect a pressure of the main steam generated in the exhaust gas economizer (5) reaches a value equal to or less than a threshold value, and the auxiliary steam generated in the auxiliary boiler (47) is supplied to the steam turbine (7), and
the threshold value is a predetermined value determined on the basis of the minimum pressure at which the steam turbine (7) is capable of being independently operated by the main steam which is supplied from the exhaust gas economizer (5) ;
and **in that** a rotary shaft of the organic fluid turbine (9) is connected to a rotary shaft of the steam turbine (7) through a rotary shaft of the generator (11) or a rotary shaft of a speed reducer (83), and
the control unit is configured to perform a control with the steam turbine (7) as a master and the organic fluid turbine (9) as a slave.

2. The waste heat recovery equipment according to claim 1, wherein the auxiliary boiler (47) is a fuel heating boiler which is configured to generate steam for heating fuel oil which is supplied to the internal combustion engine (3).

3. The waste heat recovery equipment according to claim 1, wherein a high-pressure steam stop valve (61) and a speed adjustment valve (63) are provided on an upstream side of the steam turbine (7), and the high-pressure steam stop valve (61) and the speed adjustment valve (63) are controlled by the control unit.

4. The waste heat recovery equipment according to claim 1, wherein a low-pressure steam stop valve (65) and a low-pressure steam control valve (67) are provided on an intermediate stage of the steam turbine (7), and the low-pressure steam stop valve (65) and the low-pressure steam control valve (67) are controlled by the control unit.

5. The waste heat recovery equipment according to claim 3 or 4, wherein the steam turbine (7) is rotationally driven by a superheated steam led through the high-pressure steam stop valve (61) and the speed adjustment valve (63), and a low-pressure steam led through the low-pressure steam stop valve (65) and the low-pressure steam control valve (67).

6. The waste heat recovery equipment according to claim 1, wherein an organic fluid inlet valve (80) provided on an upstream side of the organic fluid turbine (9) is controlled by the control unit, and the organic fluid turbine (9) is rotationally driven by the vapor of the organic fluid generated by the low-temperature heat source.

7. An internal combustion engine system (1) comprising:
an internal combustion engine main body; and
the waste heat recovery equipment (4) according to any of the preceding claims.

8. A ship comprising:
the internal combustion engine system (1) according to claim 7.

9. A waste heat recovery method comprising:
a main steam generation step of generating main steam by recovering heat from exhaust gas discharged from an internal combustion engine main body;
a steam turbine driving step of driving a steam turbine (7) with the main steam obtained in the main steam generation step;
an organic fluid vapor generation step of generating vapor of an organic fluid by recovering heat from a low-temperature heat source (75) having a temperature lower than a temperature at which heat is recovered in the main steam generation step;
an organic fluid turbine driving step of driving an organic fluid turbine (9) with the vapor of the organic fluid obtained in the organic fluid vapor generation step;
a power generation step of performing power generation by an output obtained in at least one of the steam turbine driving step and the organic fluid turbine driving step; and
an auxiliary steam generation step of generating auxiliary steam by using combustion heat of fuel,
wherein a rotary shaft of the organic fluid turbine (9) is connected to a rotary shaft of the steam turbine (7) through a rotary shaft of the generator (11) or a rotary shaft of a speed reducer,
the organic fluid turbine (9) is operated at a speed which is subordinated to speed adjustment of the steam turbine (7) by performing control with the steam turbine (7) as a master and the organic fluid turbine (9) as a slave,
a burner (45) of the auxiliary boiler (47) is ignited to generate auxiliary steam in a case in which a pressure value detected by a pressure sensor (26) which detects a pressure of the main steam which is generated in the main steam generation step reaches a value equal to or less than a threshold value, and the auxiliary steam generated in the auxiliary boiler is supplied to the steam turbine (7), and
the threshold value is determined on the basis of the minimum pressure at which the steam turbine (7) is capable of being independently operated by the main steam.

## Patentansprüche

1. Abwärmerückgewinnungsausrüstung, umfassend:
einen Abgasvorwärmer (5), der konfiguriert ist, Hauptdampf durch Rückgewinnung von Abgas zu erzeugen, das von einem Verbrennungsmotorhauptkörper ausgestoßen wird;
eine Dampfturbine (7), die konfiguriert ist, hauptsächlich vom Hauptdampf angetrieben zu werden, der vom Abgasvorwärmer (5) abgeleitet ist;
einen Wärmetauscher für organisches Fluid (75), der konfiguriert ist, Dampf eines organischen Fluids durch Rückgewinnung von Wärme von einer Niedertemperaturwärmequelle zu erzeugen, die eine Temperatur aufweist, die niedriger als eine Temperatur ist, bei der Wärme im Abgasvorwärmer (5) rückgewonnen wird;
eine Turbine für organisches Fluid (9), die konfiguriert ist, vom Dampf des organischen Fluids angetrieben zu werden, der im Wärmetauscher für organisches Fluid (75) erzeugt wird;
einen Generator (11), der konfiguriert ist, elektrischen Strom durch einen Ausgang von mindestens einer der Dampfturbinen (7) und der Turbine für organisches Fluid (9) zu erzeugen;
einen Hilfsboiler (47), der konfiguriert ist, Hilfsdampf unter Verwendung von Verbrennungswärme von Treibstoff zu erzeugen; und
eine Steuereinheit; **dadurch gekennzeichnet, dass**
die Steuereinheit konfiguriert ist, einen Brenner (45) des Hilfsboilers (47) zu steuern, den Brenner (45) zu zünden, um Hilfsdampf in einem Fall zu erzeugen, in dem ein Druckwert, der von einem Drucksensor (26) erfasst wird, der konfiguriert ist, einen Druck des Hauptdampfs zu erfassen, der im Abgasvorwärmer (5) erzeugt wird, einen Wert gleich oder kleiner einem Schwellenwert erreicht, und der Hilfsdampf, der im Hilfsboiler (47) erzeugt wird, der Dampfturbine (7) zugeführt wird, und
der Schwellenwert ein vorbestimmter Wert ist, der auf der Basis des minimalen Drucks bestimmt wird, bei dem die Dampfturbine (7) fähig ist, unabhängig vom Hauptdampf betrieben zu werden, der vom Abgasvorwärmer (5) zugeführt wird;
und dadurch, dass
eine Drehwelle der Turbine für organisches Fluid (9) durch eine Drehwelle des Generators (11) oder eine Drehwelle einer Untersetzung (83) mit einer Drehwelle der Dampfturbine (7) verbunden ist, und
die Steuereinheit konfiguriert ist, eine Steuerung mit der Dampfturbine (7) als einen Master und der Turbine für organisches Fluid (9) als einen Slave durchzuführen.

2. Abwärmerückgewinnungsausrüstung nach Anspruch 1, wobei der Hilfsboiler (47) ein Treibstoffheizboiler ist, der konfiguriert ist, Dampf zum Erwärmen von Treiböl zu erzeugen, das dem Verbrennungsmotor (3) zugeführt wird.

3. Abwärmerückgewinnungsausrüstung nach Anspruch 1, wobei ein Hochdruckdampfstoppventil (61) und ein Geschwindigkeitsanpassungsventil (63) an einer stromaufwärtigen Seite der Dampfturbine (7) bereitgestellt sind und das Hochdruckdampfstoppventil (61) und das Geschwindigkeitsanpassungsventil (63) von der Steuereinheit gesteuert sind.

4. Abwärmerückgewinnungsausrüstung nach Anspruch 1, wobei ein Niederdruckdampfstoppventil (65) und ein Niederdruckdampfsteuerventil (67) an einer Zwischenstufe der Dampfturbine (7) bereitgestellt sind und das Niederdruckdampfstoppventil (65) und das Niederdruckdampfsteuerventil (67) von der Steuereinheit gesteuert sind.

5. Abwärmerückgewinnungsausrüstung nach Anspruch 3 oder 4, wobei die Dampfturbine (7) drehend von einem überhitzten Dampf, der durch das Hochdruckdampfstoppventil (61) und das Geschwindigkeitsanpassungsventil (63) geleitet wird, und einen Niederdruckdampf, der durch das Niederdruckdampfstoppventil (65) und das Niederdruckdampfsteuerventil (67) geleitet wird, angetrieben wird.

6. Abwärmerückgewinnungsausrüstung nach Anspruch 1, wobei ein organisches Fluideinlassventil (80), das an einer stromaufwärtigen Seite der Turbine für organisches Fluid (9) bereitgestellt ist, von der Steuereinheit gesteuert ist und die Turbine für organisches Fluid (9) drehend vom Dampf des organischen Fluids angetrieben wird, der von der Niedertemperaturwärmequelle erzeugt wird.

7. Verbrennungsmotorsystem (1), umfassend:
einen Verbrennungsmotorhauptkörper; und
die Abwärmerückgewinnungsausrüstung (4) nach einem der vorstehenden Ansprüche.

8. Schiff, umfassend:
das Verbrennungsmotorsystem (1) nach Anspruch 7.

9. Abwärmerückgewinnungsverfahren, umfassend:
einen Hauptdampferzeugungsschritt zum Erzeugen von Hauptdampf durch Rückgewinnung von Wärme vom Abgas, das von einem Verbrennungsmotorhauptkörper ausgestoßen wird;
einen Dampfturbinenantriebsschritt zum Antreiben einer Dampfturbine (7) mit dem Hauptdampf, der im Hauptdampferzeugungsschritt erhalten wird;
einen Erzeugungsschritt für organischen Fluiddampf zum Erzeugen von Dampf eines organischen Fluids durch Rückgewinnung von Wärme von einer Niedertemperaturwärmequelle (75), die eine Temperatur aufweist, die niedriger als eine Temperatur ist, bei der Wärme im Hauptdampferzeugungsschritt rückgewonnen wird;
einen Antriebsschritt für eine Turbine für organisches Fluid zum Antreiben einer Turbine für organisches Fluid (9) mit dem Dampf des organischen Fluids, der im Erzeugungsschritt für organischen Fluiddampf erhalten wird;
einen Stromerzeugungsschritt zum Durchführen von Stromerzeugung durch einen Ausgang, der in mindestens einem des Dampfturbinenantriebsschritts und des Antriebsschritts für eine Turbine für organisches Fluid erhalten wird; und
einen Hilfsdampferzeugungsschritt zum Erzeugen von Hilfsdampf unter Verwendung von Verbrennungswärme von Treibstoff,
wobei eine Drehwelle der Turbine für organisches Fluid (9) mit einer Drehwelle der Dampfturbine (7) durch eine Drehwelle des Generators (11) oder eine Drehwelle einer Untersetzung verbunden ist,
die Turbine für organisches Fluid (9) bei einer Geschwindigkeit betrieben wird, die Geschwindigkeitsanpassung der Dampfturbine (7) untergeordnet ist, durch Durchführen von Steuerung mit der Dampfturbine (7) als einen Master und der Turbine für organisches Fluid (9) als einen Slave,
ein Brenner (45) des Hilfsboilers (47) gezündet wird, um Hilfsdampf in einem Fall zu erzeugen, in dem ein Druckwert, der von einem Drucksensor (26) erfasst wird, der einen Druck des Hauptdampfs erfasst, der im Hauptdampferzeugungsschritt erzeugt wird, einen Wert gleich oder kleiner einem Schwellenwert erreicht und der Hilfsdampf, der im Hilfsboiler erzeugt wird, der Dampfturbine (7) zugeführt wird, und
der Schwellenwert auf der Basis des minimalen Drucks bestimmt wird, bei dem die Dampfturbine (7) fähig ist, unabhängig vom Hauptdampf betrieben zu werden.

## Revendications

1. Équipement de récupération de chaleur comprenant :
un économiseur de gaz d'échappement (5) qui est configuré pour générer de la vapeur principale en récupérant de la chaleur des gaz d'échappement évacués d'un corps principal de moteur à combustion interne ;
une turbine à vapeur (7) qui est configurée pour être principalement entraînée par la vapeur principale provenant de l'économiseur de gaz d'échappement (5) ;
un échangeur de chaleur à fluide organique (75) qui est configuré pour générer de la vapeur d'un fluide organique en récupérant de la chaleur provenant d'une source de chaleur à basse température ayant une température inférieure à une température à laquelle de la chaleur est récupérée dans l'économiseur de gaz d'échappement (5) ;
une turbine à fluide organique (9) qui est configurée pour être entraînée par la vapeur du fluide organique générée dans l'échangeur de chaleur à fluide organique (75) ;
un générateur (11) qui est configuré pour générer de l'électricité par une sortie provenant d'au moins une de la turbine à vapeur (7) et de la turbine à fluide organique (9) ;
une chaudière auxiliaire (47) qui est configurée pour générer de la vapeur auxiliaire en utilisant de la chaleur de combustion du carburant ; et
une unité de commande ; **caractérisé en ce que**
l'unité de commande est configurée pour commander à un brûleur (45) de la chaudière auxiliaire (47) d'enflammer le brûleur (45) pour générer de la vapeur auxiliaire dans un cas où une valeur de pression détectée par un capteur de pression (26) qui est configuré pour détecter une pression de la vapeur principale générée dans l'économiseur de gaz d'échappement (5) atteint une valeur inférieure ou égale à une valeur seuil, et la vapeur auxiliaire générée dans la chaudière auxiliaire (47) est fournie à la turbine à vapeur (7), et
la valeur seuil est une valeur prédéterminée déterminée sur la base de la pression minimale à laquelle la turbine à vapeur (7) est capable de fonctionner de façon indépendante par la vapeur principale qui est fournie par l'économiseur de gaz d'échappement (5) ; et **en ce que**
un arbre rotatif de la turbine à fluide organique (9) est connecté à un arbre rotatif de la turbine à vapeur (7) par l'intermédiaire d'un arbre rotatif du générateur (11) ou d'un arbre rotatif d'un réducteur de vitesse (83), et
l'unité de commande est configurée pour effectuer une commande avec la turbine à vapeur (7) comme maître et la turbine à fluide organique (9) comme esclave.

2. Équipement de récupération de chaleur selon la revendication 1, dans lequel la chaudière auxiliaire (47) est une chaudière de chauffage à combustible qui est configurée pour générer de la vapeur pour chauffer du combustible qui est fourni au moteur à combustion interne (3).

3. Équipement de récupération de chaleur selon la revendication 1, dans lequel une soupape d'arrêt de vapeur haute pression (61) et une soupape de réglage de vitesse (63) sont placées sur un côté amont de la turbine à vapeur (7), et la soupape d'arrêt de vapeur haute pression (61) et la soupape de réglage de vitesse (63) sont commandées par l'unité de commande.

4. Équipement de récupération de chaleur selon la revendication 1, dans lequel une soupape d'arrêt de vapeur basse pression (65) et une soupape de commande de vapeur basse pression (67) sont placées sur un étage intermédiaire de la turbine à vapeur (7), et la soupape d'arrêt de vapeur basse pression (65) et la soupape de commande de vapeur basse pression (67) sont commandées par l'unité de commande.

5. Équipement de récupération de chaleur selon la revendication 3 ou 4, dans lequel la turbine à vapeur (7) est entraînée en rotation par une vapeur surchauffée guidée à travers la soupape d'arrêt de vapeur haute pression (61) et la soupape de réglage de vitesse (63), et par une vapeur basse pression guidée à travers la soupape d'arrêt de vapeur basse pression (65) et la soupape de commande de vapeur basse pression (67).

6. Équipement de récupération de chaleur selon la revendication 1, dans lequel une soupape d'admission de fluide organique (80) placée sur un côté amont de la turbine à fluide organique (9) est commandée par l'unité de commande, et la turbine à fluide organique (9) est entraînée en rotation par la vapeur du fluide organique générée par la source de chaleur basse température.

7. Système de moteur à combustion interne (1) comprenant :
un corps principal de moteur à combustion interne ; et
l'équipement de récupération de chaleur (4) selon l'une quelconque des revendications précédentes.

8. Bateau comprenant :
le système de moteur à combustion interne (1) selon la revendication 7.

9. Procédé de récupération de chaleur comprenant :
une étape de génération de vapeur principale consistant à générer de la vapeur principale en récupérant de la chaleur provenant des gaz d'échappement évacués d'un corps principal de moteur à combustion interne ;
une étape d'entraînement de turbine à vapeur consistant à entraîner une turbine à vapeur (7) avec la vapeur principale obtenue à l'étape de génération de vapeur principale ;
une étape de génération de vapeur de fluide organique consistant à générer de la vapeur d'un fluide organique en récupérant de la chaleur provenant d'une source de chaleur basse température (75) ayant une température inférieure à une température à laquelle de la chaleur est récupérée à l'étape de génération de vapeur principale ;
une étape d'entraînement de turbine à fluide organique consistant à entraîner une turbine à fluide organique (9) avec la vapeur du fluide organique obtenue à l'étape de génération de vapeur de fluide organique ;
une étape de génération d'électricité consistant à effectuer une génération d'électricité par une sortie obtenue dans au moins une de l'étape d'entraînement de turbine à vapeur et de l'étape d'entraînement de turbine à fluide organique ; et
une étape de génération de vapeur auxiliaire consistant à générer de la vapeur auxiliaire en utilisant la chaleur de combustion du combustible,
dans lequel un arbre rotatif de la turbine à fluide organique (9) est connecté à un arbre rotatif de la turbine à vapeur (7) par l'intermédiaire d'un arbre rotatif du générateur (11) ou d'un arbre rotatif d'un réducteur de vitesse,
la turbine à fluide organique (9) fonctionne à une vitesse qui est subordonnée à un réglage de vitesse de la turbine à vapeur (7) en effectuant une commande avec la turbine à vapeur (7) comme maître et la turbine à fluide organique (9) comme esclave,
un brûleur (45) de la chaudière auxiliaire (47) est enflammé pour générer de la vapeur auxiliaire dans un cas où une valeur de pression détectée par un capteur de pression (26) qui détecte une pression de la vapeur principale qui est générée à l'étape de génération de vapeur principale atteint une valeur inférieure ou égale à une valeur seuil, et la vapeur auxiliaire générée dans la chaudière auxiliaire est fournie à la turbine à vapeur (7), et
la valeur seuil est déterminée sur la base de la pression minimale à laquelle la turbine à vapeur (7) est capable de fonctionner de façon indépendante par la vapeur principale.
